# EUROPÄISCHE PATENTSCHRIFT

(11) **EP 0 899 241 B1**
(45) Veröffentlichungstag und Bekanntmachung des Hinweises auf die Patenterteilung: **06.03.2002**
(21) Anmeldenummer: 98111629.6
(22) Anmeldetag: 24.06.1998
(51) Int. Cl.: C02F 3/12, C02F 3/28, C02F 3/30

(54) **Verfahren und Vorrichtung zur biologischen Phosphoreliminierung aus Abwässern**
Waste water treatment process and system for biological phosphorus elimination
Procédé et dispositif pour élimination biologique de phosphore

(30) Priorität: 25.08.1997 DE 19736947
(43) Veröffentlichungstag der Anmeldung: 03.03.1999
(73) Patentinhaber: SFC Schueffl & Forsthuber Consulting GmbH, 5020 Salzburg (AT)
(72) Erfinder: Demoulin, Gunnar, Dipl.-Ing., 4894 Oberhofen (AT)
(74) Vertreter: Tomerius, Isabel, Dr. Dipl.-Chem.

(56) Entgegenhaltungen:
- EP-A- 0 346 013
- EP-A- 0 396 142
- DE-C- 4 141 832
- US-A- 5 397 474
- US-A- 5 651 891
- US-A- 5 733 456
- PATENT ABSTRACTS OF JAPAN vol. 012, no. 084 (C-482), 17. März 1988 & JP 62 221496 A (TOSHIBA CORP), 29. September 1987 -& DATABASE WPI Section Ch, Week 8744 Derwent Publications Ltd., London, GB; Class D15, AN 87-311495 XP002084783 "Digested sludge return control system..." A ((TOKE) TOSHIBA KK), 29. September 1987
- PATENT ABSTRACTS OF JAPAN vol. 009, no. 247 (C-307), 3. Oktober 1985 & JP 60 102998 A (TOSHIBA KK), 7. Juni 1985

## Beschreibung

Die Erfindung betrifft ein Verfahren und eine Vorrichtung zum Reinigen von Abwasser. Insbesondere betrifft die Erfindung ein Verfahren und eine Vorrichtung zum Reinigen kommunalen Abwassers nach dem Belebtschlamm-Verfahren.

Das Belebtschlamm-Verfahren beruht darauf, daß in einem Belebungsbecken die Abwasserinhaltsstoffe von Mikroorganismen, die diese Inhaltsstoffe als Nahrungs- und Energiequelle nutzen, abgebaut werden. In einem dem Belebungsbecken nachgeschaltenen Nachklärbecken wird das Abwasser sedimentiert, der Schlamm wird konzentriert, teilweise rezirkuliert und seiner erneuten Verwendung zugeleitet. Das Belebungsbecken ist üblicherweise in verschiedene Stufen oder Teilbecken unterteilt. Jedes dieser Teilbecken stellt einen Teillebensraum für bestimmte Mikroorganismenstämme dar. Es werden belüftete (aerobe) und unbelüftete (anaerobe und anoxische) Becken unterschieden. In den aeroben Becken bauen Mikroorganismen unter Verwendung des im Abwasser gelösten Sauerstoffs Kohlenstoff und Ammonium durch Oxidation ab (Nitrifikation). In den anoxischen Becken wird Nitrat zu Stickstoff reduziert (Denitrifikation). Anaerobe Becken, die weder Sauerstoff noch Nitrat enthalten, dienen zur Entfernung von Phosphor aus dem Abwasser.

Der in den anaeroben Becken stattfindende Phosphorabbau beruht darauf, daß bestimmte Mikroorganismen Phosphor für ihren Energiehaushalt benötigen und Phosphor aus dem Abwasser entziehen. Die Mikroorganismen besitzen einen Polyphosphat-Energiespeicher. Um Energie zu erzeugen, wird der Polyphosphat-Speicher aufgelöst, und dabei werden lösliche Phosphate freigesetzt. Die auf diese Weise erzeugte Energie wird von den Mikroorganismen unter anderem dazu verwendet, bestimmte Carbonsäuren wie Essig- oder Propionsäure, welche wasserlöslich sind, in die Zellen aufzunehmen und in Polyhydroxybutyrat (PHB) umzuwandeln, das die Mikroorganismen als Speicherstoff benötigen. Bei diesem Vorgang besteht eine stöchiometrische Beziehung zwischen den aufgenommenen Carbonsäuren und dem aus dem Polyphosphat-Energiespeicher freigesetzten Phosphat. In einem auf das Anaerobbecken folgende Aerobbecken verwenden die Mikroorganismen das in die Zellen eingelagerte PHB zum Zellaufbau. Dabei wird verstärkt Phosphor in die Zellen aufgenommen und der Polyphosphatspeicher wieder aufgefüllt. Der Phosphorverbrauch bei diesem Vorgang ist größer als die Menge an Phosphor, die zuvor im Anaerobbecken abgegeben wurde. Die Phosphorbilanz für beide Becken (aerobes und anaerobes Becken) ist also negativ, d.h. insgesamt wird dem Belebungsbecken Phosphor entzogen.

Eine Nettoeliminierung von Phosphor aus dem Belebungsbecken ist jedoch nur möglich, wenn hinreichend Carbonsäuren im Abwasser vorhanden sind, die von den Mikroorganismen zu Polyhydroxybutyrat verarbeitet werden können. Häufig reicht die im Rohabwasser vorhandene Menge an Carbonsäuren jedoch nicht aus, um eine hinreichende Phosphoreliminierung sicherzustellen. Dies gilt insbesondere dann, wenn dem Belebungsbecken ein sogenanntes Vorklärbecken vorgeschaltet ist, in welchem sedimentierbare, organische Abwasserinhaltsstoffe abgeschieden werden. Eine solche Vorklärung wird häufig vorgenommen, da auf diese Weise die Menge des zu behandelnden Abwassers deutlich reduziert werden kann.

Die nachfolgende Abwasserbehandlung kann dann in sehr viel kleineren Anlagen durchgeführt werden, was zu einer erheblichen Kosteneinsparung führt. Das bei der Vorklärung erhaltene organische Sediment wird häufig als Primärschlamm bezeichnet und enthält in der Regel einen Anteil von über 60 Gew.-% an organischen Bestandteilen. Diese organischen Bestandteile sind jedoch eine Quelle für die von den Mikroorganismen benötigten Carbonsäuren. Die Carbonsäuren bilden sich aus dem Primärschlamm durch anaerobe Fermentierung. Wegen der relativ geringen Verweilzeit des Rohabwassers in den Vorklärbecken reicht die Fermentationszeit üblicherweise nicht aus, um die notwendigen Mengen an Carbonsäuren zu bilden.

Eine Maßnahme, die benötigten Mengen an Carbonsäuren zu erreichen, besteht darin, den Primärschlamm nach der Vorklärung einer Fermentationsanlage zuzuführen, in welcher der Primärschlamm unter anaeroben Bedingungen fermentiert wird. Die dabei gebildeten Carbonsäuren werden dann der anaeroben Stufe der Phosphoreliminierung des Belebungsbekkens zugesetzt. Auf diese Weise kann erreicht werden, daß die Mikroorganismen auf biologischem Wege größere Mengen an Phosphor abbauen und dem Abwasser entziehen. Nicht-biologische Maßnahmen zur Phosphorentfernung aus dem Abwasser können damit reduziert werden. Dies bringt einerseits eine Kostenreduzierung, und andererseits werden dadurch Kläranlage und Umwelt geschont. Die nicht-biologische Phosphoreliminierung bedient sich beispielsweise Fällungsmitteln, wie Eisen-III- und Aluminiumsalzen oder Polymeren. Diese Fällungsmittel greifen einerseits metallische Teile der Kläranlage an und führen andererseits zu einer erhöhten Salzkonzentration im Abwasser. Diese Nachteile können vermieden oder wenigstens stark reduziert werden, wenn Phosphor verstärkt auf biologischem Wege durch Mikroorganismen aus dem Abwasser entfernt wird.

Die Fermentierung des bei einer Vorklärung abgetrennten Primärschlamms erweist sich in der Praxis jedoch als schwierig durchführbar. Um eine konstante Eliminierung von Phosphor aus dem Abwasser zu erreichen, ist es notwendig, in den Belebungsbecken, welche die Phosphor-abbauenden Mikroorganismen enthalten, für eine konstante Konzentration an Carbonsäuren zu sorgen. Bei den bisher bekannten Kläranlagen ist dies nicht in hinreichendem Maße sichergestellt. Wird beispielsweise die Fermentation des Primärschlamms im Vorklärbecken direkt durchgeführt, muß der Primärschlamm eine bestimmte Zeit zur Fermentierung im Vorklärbecken verbleiben. Um die bei der Fermentierung gebildeten Carbonsäuren auswaschen zu können, wird der Primärschlamm in den Zulauf des Vorklärbeckens rezirkuliert. Bei den hydraulischen Spülstößen kommt es immer wieder zu unkontrolliertem Schlammabtrieb, der eine Unterbrechung des Verfahrens notwendig macht. Eine kontinuierliche kontrollierte Zugabe von Carbonsäuren zum Belebungsbecken gelingt nicht.
Gleiches gilt für Anlagen, bei denen einem Vorklärbecken ein Fermentor und gegebenenfalls ein Auswaschbecken nachgeschaltet ist. Zum Trennen von fermentiertem Primärschlamm und Auswaschwasser wird die Fermentationsmischung hier erneut in das Vorklärbecken zurückgeführt. Ein Nachteil derartiger Anlage besteht darin, daß die Menge an Auswaschwasser nicht gezielt auf die jeweiligen Verfahrenserfordernisse angepaßt werden kann, da sie von dem Zulauf in das Vorklärbecken abhängig ist. Nachteilig ist dies besonders bei den sogenannten Kaskaden-Belebungsverfahren, bei denen nur ein geringer Teil des vorgeklärten Rohabwassers in die Anaerobbecken geleitet wird, während ein größerer Teil den sogenannten Anoxbecken zugeführt wird. Bei letzteren ist das Vorhandensein von Carbonsäuren ohne Bedeutung.

Ein Nachteil, der allen beschriebenen Fermentationsverfahren gemeinsam ist, besteht darin, daß die Fermentation des Primärschlamms leicht in eine methanogene Faulung übergeht. Anstelle von Carbonsäuren wird dann Methan gebildet. Wenn die Fermentierung des Primärschlamms in eine Faulung umschlägt, ist das aus der Fermentationsanlage gewonnene Auswaschwasser nicht mehr geeignet, die Phosphoreliminierung durch Mikroorganismen in den Belebtschlammbecken zu fördern. Der Phosphor muß dann auf nicht-biologischem Wege durch Zugabe von Fällungsmitteln aus dem Abwasser entfernt werden.

Die DE 41 41 832 C1 betrifft die Weiterverarbeitung von Klärschlamm im Anschluß an ein übliches Klärverfahren. Dieser Klärschlamm, dem gegebenenfalls Primärschlamm zugesetzt sein kann, wird in einem Versäuerungsreaktor anaerob versäuert. Diese Versäuerung wird bei einer Temperatur zwischen 20 und 70 °C in einem pH-Bereich von 3,5 bis 6,5 durchgeführt. Zweck des Versäuerungsverfahrens ist es, einen hoch mineralisierten Schlamm zu erhalten, der sich gut entwässern läßt und sich besser als übliche Klärschlämme zur Erzeugung von Biogas, also Methan, eignet.

**Aufgabe** der Erfindung ist es, ein Verfahren und eine Vorrichtung zum Reinigen von Abwasser nach dem Belebtschlamm-Verfahren anzugeben, bei welchem sichergestellt ist, daß ein möglichst hoher Anteil an Phosphor im Abwasser auf biologischem Wege mit Hilfe von Mikroorganismen abgebaut werden kann. Verfahren und Vorrichtung sollten so ausgelegt sein, daß ein kontinuierlicher und vollautomatischer Betrieb der Kläranlage gewährleistet ist.

Die Lösung dieser Aufgabe gelingt mit dem Verfahren gemäß Anspruch 1 sowie der Vorrichtung gemäß Anspruch 22, welche Bestandteil einer Vorrichtung zur Abwasserreinigung gemäß Anspruch 26 ist. Weitere Verfahrensvarianten und Ausführungsformen ergeben sich aus den Unteransprüchen.

Die Erfindung betrifft also in ihrem ersten Aspekt ein Verfahren zum Reinigen von Abwasser nach dem Belebtschlamm-Verfahren. Das erfindungsgemäße Verfahren umfaßt einen Vorklärschritt, bei welchem Primärschlamm aus dem Rohabwasser abgetrennt und nach dem Abtrennen unter anaeroben Bedingungen fermentiert wird. Erfindungsgemäß wird die anaerobe Fermentation des Primärschlammes so durchgeführt, daß der pH-Wert in der Fermentationsmischung auf einen Wert zwi-schen 4,0 und 8,0 eingestellt wird und das Redoxpotential der Fermentationsmischung (2) bestimmt und bei Feststellen einer Abweichung von einem Bereich zwischen -100 und -400 mV die Fermentation gestoppt wird. Die Redoxpotentialwerte sind jeweils bezogen auf eine Silber-Silberchlorid-Elektrode angegeben. Ein bevorzugter pH-Bereich liegt bei 4,5 bis 7 und insbesondere 5,0 bis 5,5.

Durch die Einstellung des pH-Wertes und des Redoxpotentials auf die genannten Werte wird sichergestellt, daß in der Fermentationsmischung keine methanogene Faulung stattfindet. Bei Einhaltung der beschriebenen Werte wird der Primärschlamm in effektiver Weise fermentiert, so daß sich die gewünschten Carbonsäuren, insbesondere Essig- und Propionsäure, bilden. Nach Beendigung der Fermentation sind in der Fermentationsmischung die von den Mikroorganismen zum Phosphorabbau benötigen Carbonsäuren in hinreichender Menge vorhanden. Dies stellt sicher, daß die nachfolgende Klärung des Abwassers in den Belebungsbecken kontinuierlich und ohne Ausfälle der Anlage erfolgen kann und dabei ein Großteil des Phosphors auf biologischem Wege aus dem Abwasser entfernt wird. Der Zusatz von Fällungsmitteln kann deshalb auf ein minimales Maß reduziert werden. Dies führt nicht nur zu einer Schonung der Umwelt, da ein Chemikalienzusatz zum Abwasser und das Versalzen des Abwasser weitestgehend vermieden werden, sondern auch zu einer deutlichen Kostenreduktion. Diese liegt im Falle kommunaler Abwasserreiningungsanlagen in einem Bereich von etwa 0,80 DM pro Einwohnergleichwert und Jahr.

Das erfindungsgemäße Verfahren wird vorteilhaft am besten mit einem Primärschlamm durchgeführt, der einen organischen Anteil von mindestens 60 Gew.-% besitzt.

Nach der Fermentierung wird der Primärschlamm zweckmäßig in ein der Fermentationsanlage nachgeschaltetes Auswaschbecken überführt und dort mit Auswaschwasser behandelt. Dabei reichert sich das Auswaschwasser an den während der Fermentation gegebildeten Carbonsäuren an. Um eine möglichst gleichbleibende Qualität des an Carbonsäuren angereicherten Auswaschwassers zu erreichen, wird bei der Überführung des Primärschlamms aus der Fermentationsanlage in das Auswaschbecken zweckmäßig eine geringe Menge des fermentierten Primärschlamms in der Fermentationsanlage zurückbehalten. Dieser Rest des Primärschlamms dient als Impfschlamm für einen erneuten Fermentationsvorgang.

Nach dem Behandeln mit Auswaschwasser wird der Primärschlamm zweckmäßig in ein dem Auswaschbecken nachgeschaltetes Absetzbecken überführt, wo man den Primärschlamm sich absetzen läßt und ein an Carbonsäuren angereichertes Auswaschwasser aus dem Absetzbecken abzieht. Dieses an Carbonsäuren angereicherte Auswaschwasser kann dann einer anaeroben Stufe eines Belebungsbeckens zugeführt werden, um dort den Mikroorganismen als Nahrungs- und Energiequelle zu dienen. Nach der Trennung von Auswaschwasser und fermentiertem Primärschlamm wird der Primärschlamm aus dem Absetzbecken abgezogen. Ein Teil dieses Primärschlamms kann als Impfschlamm in die Fermentationsanlage zurückgeführt werden. Diese Variante kann alternativ zum Belassen eines Restes des fermentierten Primärschlamms in der Fermentationsanlage oder zusätzlich zu diesem Schritt durchgeführt werden.

Wird in der Fermentationsmischung der pH-Wert bestimmt und weicht dieser Wert von dem vorgegebenen Bereich zwischen 4,0 und 8,0 ab, kann einerseits die Fermentation abgebrochen werden, um methanogene Fehlgärungen auszuschließen.

Eine bevorzugte Variante besteht jedoch darin, beim Feststellen einer Abweichung aus dem vorgegebenen pH-Bereich der Fermentationsmischung eine geeignete Verbindung zuzusetzen, um den pH-Wert in den gewünschten Bereich zurückzubringen. Fällt der pH-Wert unter den unteren Wert von 4,0, wird zweckmäßig eine Base zugesetzt, während beim Ansteigen des pH-Wertes über 8,0 eine Säure zur Fermentationsmischung gegeben wird. Auf diese Weise kann der Fermentationsprözess ohne Unterbrechung fortgesetzt werden.

Stellt man fest, daß das Redoxpotential von dem vorgegebenen Bereich zwischen -100 und -400 mV abweicht, wird die Fermentation abgebrochen. Eine solche Abweichung vom vorgegebenen Redoxpotential-Bereich tritt in aller Regel erst ein, wenn bereits eine hinreichende Konzentration an Carbonsäuren in der Fermentationsmischung gebildet ist. Durch rechtzeitiges Unterbrechen des Fermentationsprozesses kann verhindert werden, daß die Fermentation in eine methanogene Faulung übergeht.

Es hat sich weiterhin als zweckmäßig erwiesen, die Fermentationszeit des Primärschlamms in der Fermentationsanlage zu kontrollieren. Wird der Fermentationszeitraum auf maximal 20 Tage beschränkt, läßt sich auch dadurch das Auftreten methanogener Faulung weitgehend verhindern.

Für die Fermentation hat es sich weiter als vorteilhaft erwiesen, wenn der Trockensubstanz-Gehalt in der Fermentationsanlage auf mindestens 0,5 Gew.-% eingestellt wird. Zu diesem Zweck wird vorteilhaft auch der Trockensubstanz-Gehalt in der Fermentationsanlage gemessen. Um zu verhindern, daß der Trockensubstanz-Gehalt in der Fermentationsmischung auf einen Wert unter 0,5 Gew.-% sinkt, wird, wenn dies erforderlich ist, zweckmäßig Flüssigkeit aus der Fermentationsanlage abgezogen, so daß der Trockensubstanz-Gehalt wieder ansteigt.

Zur Steuerung des Fermentationsprozesses hat es sich zudem als nützlich erwiesen, die Konzentration an Carbonsäuren in der Fermentationsmischung zu bestimmen. Ist die gewünschte Endkonzentration an Carbonsäuren erreicht, wird der Fermentationsvorgang zweckmäßig abgebrochen. Als weiterer Parameter, der zur Steuerung der Fermentation von Nutzen ist, kann außerdem die Füllstandshöhe in der Fermentationsanlage angesprochen werden.

Zweckmäßig werden die genannten Meßgrößen in vorgegebenen Abständen automatisch bestimmt und ausgewertet. Auf diese Weise ist ein vollautomatischer kontinuierlicher Betrieb der Abwasserreinigung möglich. Meßvorrichtungen und Steuereinrichtungen für die Abwasserreinigungsanlage entsprechen dabei dem im Stand der Technik Üblichen.

Von besonderem Vorteil umfaßt die Fermentationsanlage zwei oder mehr Fermentoren. Bei Verwendung mehrerer Fermentoren in einer Fermentationsanlage werden die genannten Meßgrößen von Vorteil für jeden Fermentor gesondert bestimmt, und die vorgegebenen Meßbereiche und Zeitvorgaben werden für jeden Fermentor gesondert eingehalten.

Zweckmäßig werden die Fermentoren im zeitversetzten Batch-Betrieb betrieben, so daß eine gleichbleibende Fermentationsmischung am Ende des jeweiligen Fermentationszyklus aus den verschiedenen Fermentoren abgezogen werden kann. Vorzugsweise werden die Fermentoren also derart betrieben, daß die Fermentationsvorgänge in den Fermentoren zeitversetzt gestartet und entsprechend zeitversetzt beendet werden. Auf diese Weise ist es möglich, die Anlage so zu steuern, daß wenigstens aus einem der Fermentoren an Carbonsäuren angereichertes Auswaschwasser gewonnen werden kann, das die gewünschte Konzentration an den Carbonsäuren besitzt. Den Belebungsbecken kann also kontinuierlich Auswaschwasser zugeführt werden, das eine konstant bleibende Konzentration an Carbonsäuren aufweist. Zeitpunkt und Zeitraum, in welchen einem der Fermentoren Primärschlamm entnommen wird, um aus ihm durch Auswaschen mit Carbonsäuren angereichertes Auswaschwasser zu gewinnen, und die Entnahmemenge werden besonders vorteilhaft automatisch in Abhängigkeit von der Füllstandshöhe des jeweiligen Fermentors gesteuert.

Das erfindungsgemäße Verfahren gewährleistet eine kontinuierliche, kontrollierbare Fermentation von Primärschlamm, bei welchem Auswaschwässer erhalten werden, die einen konstant hohen Gehalt an Carbonsäuren aufweisen. Damit ist eine konstante Zufuhr von Carbonsäuren zu den Belebungsbecken sichergestellt, wodurch wiederum eine kontinuierliche Phosphoreliminierung in den Belebungsbecken ermöglicht wird. Das erfindungsgemäße Verfahren erlaubt es, Fällungsmittel zum chemischen Ausfällen von Phosphor aus dem Abwasser in größtmöglichem Maße einzusparen. Das frühzeitige Entfernen des Primärschlamms aus dem Abwasser erlaubt es außerdem, die Belebungsbecken klein zu halten. Das erfindungsgemäße Verfahren ermöglicht es also, eine Abwasserreinigungsanlage vollautomatisch und kontinuierlich bei sehr geringen Kosten und geringer Belastung der Umwelt zu betreiben.

Die Erfindung betrifft weiterhin eine Vorrichtung, die zur Durchführung des erfindungsgemäßen Verfahrens besonders geeignet ist. Die erfindungsgemäße Vorrichtung zum Reinigen von Abwasser nach dem Belebtschlamm-Verfahren umfaßt neben einer Einrichtung zum Vorklären, in der Primärschlamm abgetrennt wird, eine Vorrichtung zur Gewinnung von an Carbonsäuren angereichertem Auswaschwasser. Letztere ist ebenfalls Bestandteil der Erfindung. Sie ist der Einrichtung zum Vorklären nachgeschaltet und umfaßt eine Fermentationsanlage zum anaeroben Fermentieren des Primärschlamms, ein der Fermentationsanlage nachgeschaltetes Auswaschbecken und ein Absetzbecken zum Trennen des fermentierten Primärschlamms und des an Carbonsäuren angereicherten Auswaschwassers.

Vorzugsweise umfaßt die Fermentationsanlage zwei oder mehr Fermentoren. Diesen kann, wie vorstehend beschrieben, im Wechsel fermentierter Primärschlamm entnommen und in dem Auswaschbecken ausgewaschen werden, so daß kontinuierlich an Carbonsäuren angereichtertes Auswaschwasser erhalten wird.

Fermentationsanlage und Absetzbecken sind zweckmäßig durch eine Leitung verbunden, in denen fermentierter Primärschlamm in die Fermentationsanlage zurückgeführt werden kann. Der rückgeführte fermentierte Primärschlamm dient als Impfschlamm in einem nachfolgenden Fermentationszyklus.

Von Vorteil besitzt die Fermentationsanlage weiterhin einen Überlauf, durch welchen der Überstand der Fermentationsmischung in das Auswaschbecken abgeleitet werden kann. Der Überlauf kann beispielsweise dazu verwendet werden, den Trockensubstanz-Gehalt in der Fermentationsmischung auf das gewünschte Niveau einzuregulieren.

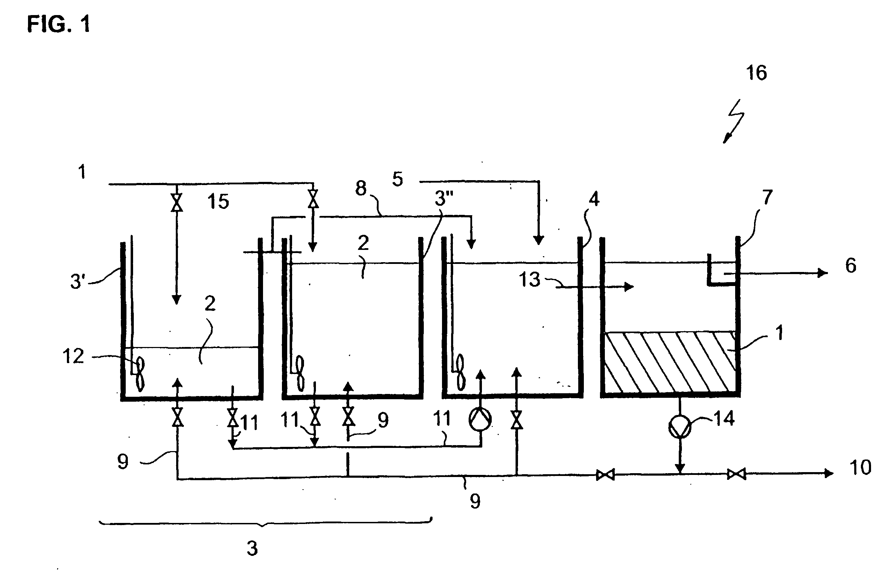

Die Erfindung soll nachfolgend anhand einer Zeichnung näher erläutert werden. Darin zeigt
- Fig. 1: schematisch eine erfindungsgemäße Vorrichtung zur Gewinnung von Auswaschwasser.

Im einzelnen zeigt Figur 1 eine erfindungsgemäße Vorrichtung 16 zur Gewinnung von Auswaschwasser, welches mit Carbonsäure angereichert ist. Die Vorrichtung zur Gewinnung von Auswaschwasser ist Teil einer erfindungsgemäßen Vorrichtung zum Reinigen von Abwasser nach dem Belebtschlamm-Verfahren. Die übrigen, in Figur 1 nicht dargestellten Teile der erfindungsgemäßen Vorrichtung zur Abwasserreinigung, beispielsweise Vorrichtungen zum Vorklären des Primärschlamms, Belebungsbecken zur weiteren Reinigung des Abwassers und Nachklärbecken können auf die im Stand der Technik übliche Art und Weise ausgebildet sein.

Die in Fig. 1 dargestellte Vorrichtung 16 zur Gewinnung von Auswaschwasser ist einer Einrichtung zum Vorklären von Primärschlamm nachgeschaltet. Der in der Vorklär-Einrichtung abgetrennte Primärschlamm 1 wird der Fermentationsanlage 3 zugeführt. Im gezeigten Fall umfaßt die Fermentationsanlage 3 zwei Fermentoren 3' und 3", welche parallel geschaltet sind. In beiden Fermentoren ist eine an Primärschlamm 1 angereicherte Fermentationsmischung 2 vorhanden, die mit Hilfe von Rührern 12 bewegt wird. Die Zufuhr des Primärschlamms 1 wird mit Hilfe der Ventile 15 gesteuert. Die Befüllung der Fermentoren 3' und 3" geschieht dabei so, daß die Fermentationsmischung 2 sich im Fermentor 3' in einem anderen Fermentationsstadium befindet als die Fermentationsmischung 2 im Fermentor 3". Die Fermentoren 3' und 3" besitzen einen gemeinsamen Überlauf 8, mit dem Flüssigkeit aus den Fermentoren abgezogen werden kann, beispielsweise, um den Trockensubstanz-Gehalt in der Fermentationsmischung 2 zu erhöhen.

Die Fermentation wird über die Bestimmung des pH-Werts und des Redoxpotentials in der Fermentationsmischung 2 für jeden Reaktor 3' und 3" gesondert gesteuert. Außerdem können zusätzlich, falls gewünscht, einer oder mehrere der vorstehend angesprochenen Meßparameter bestimmt werden. Die Messung kann jeweils direkt in der Fermentationsmischung in den Fermentoren 3' und 3" erfolgen. Alternativ ist es möglich, im Bereich der Fermentoren 3' und 3" Entnahmevorrichtungen vorzusehen, mit denen Fermentationsmischung 2 zu gesondert angeordneten Meßvorrichtungen geführt wird. Die einzelnen Meßvorrichtungen sind in Figur 1 der Übersichtlichkeit halber nicht dargestellt, entsprechen jedoch im Stand der Technik üblichen Vorrichtungen.

In dem in Figur 1 dargestellten Stadium des Fermentationsvorgangs ist die Fermentation im Fermenter 3' abgeschlossen. Die gewünschte Konzentration an Carbonsäuren in der Fermentationsmischung ist erreicht. Dagegen ist die Fermentation im zweiten Fermentor 3" noch nicht beendet.
Aus dem Fermentor 3' wird die Fermentationsmischung 2 über eine Leitung 11 dem Auswaschbecken 4 zugeführt. Hier wird die Fermentationsmischung mit Auswaschwasser 5 behandelt und über eine Leitung 13 dem Absetzbecken 7 zugeführt. Hier läßt man den fermentierten Primärschlamm 1 absitzen und zieht das an Carbonsäuren angereicherte Auswaschwasser 6 aus dem Überstand des Absetzbeckens 7 ab. Das an Carbonsäuren angereicherte Auswaschwasser 6 kann einer anaeroben Stufe eines Belebungsbeckens zugeführt werden, wo die Carbonsäuren als Nahrungs- und Energiequelle von Mikroorganismen eingesetzt werden, welche Phosphor aus dem Abwasser eliminieren.

Ein Teil des fermentierten Primärschlamms 1, der sich am Boden des Absetzbeckens 7 angesammelt hat, wird mit Hilfe einer Pumpe 14 durch Leitung 9 in den ersten Fermentor 3' zurückgeführt und dient hier als Impfschlamm für einen nachfolgenden Fermentationsvorgang. Der nicht benötigte Primärschlamm 1 aus dem Absetzbecken 7 wird über Leitung 10 abgezogen. Sobald anhand der Meßwerte, welche für den Fermentor 3" ermittelt wurden, festgestellt wird, daß auch die Fermentation in diesem Fermentor abgeschlossen ist und die benötigte Menge an Carbonsäure gebildet wurde, wird der Fermentationsvorgang im Fermentor 3" abgebrochen. Auf die für Fermentor 3' beschriebene Weise wird nun die fermentierte Fermentationsmischung 2 aus dem Fermentor 3" in Auswaschbecken 4 und Absetzbecken 7 überführt. Derweil findet im ersten Fermentor 3' bereits ein neuer Fermentationszyklus statt. Beide Fermentoren 3' und 3" der Fermentationsanlage 3 werden also im Wechsel bzw. zeitlich gegeneinander versetzt betrieben. Auf diese Weise ist es möglich, dem Absetzbecken 7 kontinuierlich an Carbonsäuren angereichertes Auswaschwasser 6 zu entnehmen und außerdem eine gleichbleibende Qualität des Auswaschwassers sicherzustellen.

## Patentansprüche

1. Verfahren zum Reinigen von Abwasser nach dem Belebtschlamm-Verfahren, welches einen Vorklärschritt zur Abtrennung von Primärschlamm (1) umfaßt und worin der Primärschlamm (1) nach dem Abtrennen unter anaeroben Bedingungen fermentiert wird,
**dadurch gekennzeichnet,**
**daß** bei der anaeroben Fermentation des Primärschlammes der pH-Wert in der Fermentationsmischung (2) auf einen Wert zwischen 4,0 und 8,0 eingestellt wird und das Redoxpotential der Fermentationsmischung (2) bestimmt und bei Feststellen einer Abweichung von einem Bereich zwischen -100 und -400 mV, angegeben gegen eine Ag/AgCl-Elektrode, die Fermentation gestoppt wird.

2. Verfahren gemäß Anspruch 1,
**dadurch gekennzeichnet,**
**daß** ein Primärschlamm (1) mit einem organischen Anteil von mindestens 60 Gew.-% eingesetzt wird.

3. Verfahren gemäß einem der Ansprüche 1 oder 2,
**dadurch gekennzeichnet,**
**daß** der Primärschlamm (1) nach beendigter Fermentation in ein der Fermentationsanlage (3) nachgeschaltetes Auswaschbekken (4) überführt und dort mit Auswaschwasser (5) behandelt wird.

4. Verfahren gemäß Anspruch 3,
**dadurch gekennzeichnet,**
**daß** eine geringe Menge des fermentierten Primärschlamms (1) in der Fermentationsanlage (3) zurückbehalten wird.

5. Verfahren gemäß einem der Ansprüche 3 oder 4,
**dadurch gekennzeichnet,**
**daß** der mit Auswaschwasser (5) behandelte Primärschlamm (1) in ein dem Auswaschbecken (4) nachgeschaltetes Absetzbecken (7) überführt wird, man den Primärschlamm (1) absitzen läßt und an Carbonsäuren angereichertes Auswaschwasser (6) aus dem Absetzbecken (7) abzieht.

6. Verfahren gemäß einem der Ansprüche 3 bis 5,
**dadurch gekennzeichnet,**
**daß** das an Carbonsäuren angereicherte Auswaschwasser (6) einer anaeroben Stufe eines Belebungsbeckens zugeführt wird.

7. Verfahren gemäß einem der Ansprüche 3 bis 6,
**dadurch gekennzeichnet,**
**daß** ein Teil des fermentierten Primärschlamms (1) aus dem Absetzbecken (7) abgezogen und in die Fermentationsanlage (3) zurückgeführt wird.

8. Verfahren gemäße einem der Ansprüche 1 bis 7,
**dadurch gekennzeichnet,**
**daß** der pH-Wert der Fermentationsmischung (2) bestimmt und bei Feststellen einer Abweichung vom vorgegebenen Bereich durch Zugabe einer Säure oder Base zu der Fermentationsmischung (2) in den in Anspruch 1 definierten Bereich zurückgebracht wird.

9. Verfahren gemäß einem der Ansprüche 1 bis 8,
**dadurch gekennzeichnet,**
**daß** die Fermentationszeit des Primärschlamms (1) in der Fermentationsanlage (3) kontrolliert wird.

10. Verfahren gemäß Anspruch 9,
**dadurch gekennzeichnet,**
**daß** die Fermentation nach maximal 20 Tagen abgebrochen wird.

11. Verfahren gemäß einem der Ansprüche 1 bis 10,
**dadurch gekennzeichnet,**
**daß** der Trockensubstanz-Gehalt in der Fermentationsanlage (3) gemessen wird.

12. Verfahren gemäß Anspruch 11,
**dadurch gekennzeichnet,**
**daß** der Trockensubstanz-Gehalt auf mindestens 0,5 Gew.-% eingestellt und daß bei Unterschreitung Flüssigkeit aus der Fermentationsanlage (3) abgezogen wird.

13. Verfahren gemäß einem der Ansprüche 1 bis 12,
**dadurch gekennzeichnet,**
**daß** die Konzentration an Carbonsäuren in der Fermentationsmischung (2) bestimmt wird.

14. Verfahren gemäß Anspruch 13,
**dadurch gekennzeichnet,**
**daß** bei Erreichen einer vorgegebenen Endkonzentration an Carbonsäuren die Fermentation abgebrochen wird.

15. Verfahren gemäß einem der Ansprüche 1 bis 14,
**dadurch gekennzeichnet,**
**daß** die Füllstandshöhe in der Fermentationsanlage (3) kontrolliert wird.

16. Verfahren gemäß einem der Ansprüche 1 bis 15,
**dadurch gekennzeichnet,**
**daß** die in den vorhergehenden Ansprüchen genannten Meßgrößen in vorgegebenen Abständen, die geeignet sind, einen vollautomatischen kontinuierlichen Betrieb der Abwasserreinigung zu ermöglichen, automatisch bestimmt und ausgewertet werden.

17. Verfahren gemäß einem der Ansprüche 1 bis 16,
**dadurch gekennzeichnet,**
**daß** die Fermentationsanlage (3) zwei oder mehr Fermentoren (3', 3'') umfaßt.

18. Verfahren gemäß Anspruch 17,
**dadurch gekennzeichnet,**
**daß** für jeden Fermentor (3', 3") gesondert die in den vorhergehenden Ansprüchen genannten Meßgrößen bestimmt sowie die in den vorhergehenden Ansprüchen genannten vorgegebenen Meßbereiche und Zeitvorgaben eingehalten werden.

19. Verfahren gemäß Anspruch 17 oder Anspruch 18,
**dadurch gekennzeichnet,**
**daß** der Fermentationsvorgang in den Fermentoren (3', 3'') zeitversetzt gestartet wird.

20. Verfahren gemäß Anspruch 19,
**dadurch gekennzeichnet,**
**daß** die Fermentoren (3', 3") so betrieben werden, daß wenigstens aus einem von ihnen mit Carbonsäuren angereichertes Auswaschwasser (6) gewonnen werden kann.

21. Verfahren gemäß Anspruch 20,
**dadurch gekennzeichnet,**
**daß** Zeitpunkt und Zeitraum, in welchem einem Fermentor (3', 3") Primärschlamm (1) entnommen wird, und Entnahmemenge abhängig von der Füllstandshöhe des Fermentors automatisch gesteuert werden.

22. Vorrichtung (16) zur Gewinnung von an Carbonsäuren angereichertem Auswaschwasser (6),
**dadurch gekennzeichnet,**
**daß** sie
- eine Fermentationsanlage (3) zum anaeroben Fermentieren des Primärschlamms (1),
- ein der Fermentationsanlage (3) nachgeschaltetes Auswaschbecken (4) und
- ein Absetzbecken (7) zum Trennen des fermentierten Primärschlamms (1) und des an Carbonsäuren angereicherten Auswaschwassers (6) umfaßt.

23. Vorrichtung gemäß Anspruch 22,
**dadurch gekennzeichnet,**
**daß** die Fermentationsanlage (3) zwei oder mehr Fermentoren (3', 3") umfaßt.

24. Vorrichtung gemäß Anspruch 22 oder 23,
**dadurch gekennzeichnet,**
**daß** Fermentationsanlage (3) und Absetzbecken (7) durch eine Leitung (9) zum Rückführen fermentierten Primärschlamms (1) in die Fermentationsanlage (3) verbunden sind.

25. Vorrichtung gemäß einem der Ansprüche 22 bis 24,
**dadurch gekennzeichnet,**
**daß** die Fermentationsanlage (3) mit einem Überlauf (8) zum Ableiten des Überstands der Fermentationsmischung (2) in das Auswaschbecken (4) versehen ist.

26. Vorrichtung zum Reinigen von Abwasser nach dem Belebtschlamm-Verfahren, welche eine Einrichtung zum Vorklären umfaßt, in der Primärschlamm (1) abgetrennt wird,
**dadurch gekennzeichnet ,**
**daß** der Einrichtung zum Vorklären eine Vorrichtung (16) zur Gewinnung von an Carbonsäuren angereicherten Auswaschwasser (6) gemäß einem der Ansprüche 22 bis 25 nachgeschaltet ist.

## Claims

1. Process for sewage clarification according to the activated sludge process comprising a pre-sedimentation step for the separation of primary sludge (1), the primary sludge (1) being fermented under anaerobic conditions after separation,
**characterized by** the fact that
during anaerobic fermentation of the primary sludge the pH-value in the fermentation mixture (2) is set to a value between 4.0 and 8.0 and the redox potential of the fermentation mixture (2) is determined and the fermentation is stopped when a deviation is determined from a range between -100 and -400 mV measured by means of an Ag/AgCl electrode.

2. Process according to claim 1,
**characterized in that**
primary sludge (1) with an organic portion of at least 60 weight per cent is used.

3. Process according to claim 1 or 2,
**characterized in that**
the primary sludge (1) is conveyed to a wash basin (4) arranged subsequent to the fermentation plant (3) after fermentation has been finished and is treated with wash-out water (5) there.

4. Process according to claim 3,
**characterized in that**
a small amount of the fermented primary sludge (1) is retained in the fermentation plant (3).

5. Process according to claim 3 or 4,
**characterized in that**
the primary sludge (1), having been treated with wash-out water (5), is conveyed to a sedimentation basin (7) arranged subsequent to the wash basin (4), one lets the primary sludge (1) sediment and draws off wash-out water (6) enriched with carboxylic acids from the sedimentation basin (7).

6. Process according to one of claims 3 to 5,
**characterized in that**
the wash-out water (6) enriched with carboxylic acids is supplied to an anaerobic stage of an activated sludge basin.

7. Process according to one of claims 3 to 6,
**characterized in that**
a part of the fermented primary sludge (1) is removed from the sedimentation basin (7) and fed back to the fermentation plant (3).

8. Process according to one of claims 1 to 7,
**characterized in that**
the pH-value of the fermentation mixture (2) is determined and when a deviation from the preset range is determined it is brought back to the range defined in claim 1 by adding an acid or a base to the fermentation mixture (2).

9. Process according to one of claims 1 to 8,
**characterized in that**
the fermentation period of the primary sludge (1) in the fermentation plant (3) is controlled.

10. Process according to claim 9,
**characterized in that**
fermentation is stopped after 20 days at the most.

11. Process according to one of claims 1 to 10,
**characterized in that**
the amount of dry substance in the fermentation plant (3) is measured.

12. Process according to claim 11,
**characterized in that**
the amount of dry substance is set to at least 0.5 weight per cent and that when it falls short of this value liquid is drawn off the fermentation plant (3).

13. Process according to one of claims 1 to 12,
**characterized in that**
the concentration of carboxylic acids in the fermentation mixture (2) is determined.

14. Process according to claim 13,
**characterized in that**
fermentation is stopped when a preset final concentration of carboxylic acids is reached.

15. Process according to one of claims 1 to 14,
**characterized in that**
the level in the fermentation plant (3) is controlled.

16. Process according to one of claims 1 to 15,
**characterized in that**
the quantities to be measured mentioned in the preceding claims are determined automatically and evaluated in preset intervals which are suitable to make fully automatic continuous operation of sewage clarification possible.

17. Process according to any of claims 1 to 16,
**characterized in that**
the fermentation plant (3) comprises two or more fermenters (3', 3").

18. Process according to claim 17,
**characterized in that**
the quantities to be measured mentioned in the preceding claims are determined and the preset measuring ranges and time standards mentioned in the preceding claims are observed for each fermenter (3', 3") separately.

19. Process according to claim 17 or claim 18,
**characterized in that**
the fermentation process in the fermenters (3', 3") is started in a deferred manner.

20. Process according to claim 19,
**characterized in that**
the fermenters (3', 3") are operated in a manner that wash-out water (6) enriched with carboxylic acids can be obtained from at least one of them.

21. Process according to claim 20,
**characterized in that**
the point of time and the period of time during which primary sludge (1) is taken from a fermenter (3', 3") and the quantity to be removed are controlled automatically depending on the level of the fermenter.

22. Device (16) for obtaining wash-out water (6) enriched with caboxylic acids,
**characterized in that**
it comprises
- a fermentation plant (3) for anaerobic fermentation of the primary sludge (1),
- a wash basin (4) arranged subsequent to the fermentation plant (3) and
- a sedimentation basin (7) for separating the fermented primary sludge (1) and the wash-out water (6) enriched with carboxylic acids.

23. Device according to claim 22,
**characterized in that**
the fermentation plant (3) comprises two or more fermenters (3', 3").

24. Device according to claim 22 or 23,
**characterized in that**
the fermentation plant (3) and the sedimentation basin (7) are connected by a pipe (9) in order to feed back fermented primary sludge (1) to the fermentation plant (3).

25. Device according to one of claims 22 to 24,
**characterized in that**
the fermentation plant (3) is provided with an overflow (8) for letting out excess fermentation mixture (2) into the wash basin (4).

26. Device for sewage clarification according to the activated sludge process comprising a facility for pre-sedimentation in which the primary sludge (1) is separated,
**characterized in that**
a device (16) for obtaining wash-out water (6) enriched with carboxylic acids according to one of claims 22 to 25 is arranged subsequent to the facility for pre-sedimentation (16).

## Revendications

1. Procédé d'épuration d'eaux usées selon le procédé des boues activées, qui comprend une étape de préclarification en vue d'une séparation de boues primaires (1) et dans lequel les boues primaires (1) sont mises à fermenter dans des conditions anaérobies après la séparation, ***caractérisé en ce que,*** lors de la fermentation anaérobie des boues primaires, le pH dans le mélange de fermentation (2) est ajusté à une valeur comprise entre 4,0 et 8,0, et le potentiel redox du mélange de fermentation (2) est déterminé et la fermentation est arrêtée lorsqu'on constate un écart entre -100 et -400 mV par rapport à une électrode Ag/AgCl.

2. Procédé selon la Revendication 1, ***caractérisé en ce que*** l'on utilise des boues primaires (1) contenant une proportion organique d'au moins 60 % en poids.

3. Procédé selon la Revendication 1 ou 2, ***caractérisé en ce qu***'au terme de la fermentation, les boues primaires (1) sont transférées vers un bassin de lavage (4) placé après l'installation de fermentation (3) et y sont traitées avec de l'eau de lavage (5).

4. Procédé selon la Revendication 3, ***caractérisé en ce qu***'une faible quantité des boues primaires fermentées (1) est conservée dans l'installation de fermentation (3).

5. Procédé selon l'une quelconque des Revendication 3 ou 4, ***caractérisé en ce que*** les boues primaires (1) traitées avec de l'eau de lavage (5) sont transférées vers un bassin de décantation (7) faisant suite au bassin de lavage (4), on laisse les boues primaires (1) se décanter et on extrait du bassin de décantation (7) de l'eau de lavage (6) enrichie en acides carboxyliques.

6. Procédé selon l'une quelconque des Revendications 3 à *5,* ***caractérisé en ce que*** l'eau de lavage (6) enrichie en acides carboxyliques est envoyée à un étage anaérobie d'un bassin d'activation.

7. Procédé selon l'une quelconque des Revendications 3 à 6, ***caractérisé en ce qu***'une partie des boues primaires fermentées (1) est extraire du bassin de décantation (7) et renvoyée dans l'installation de fermentation (3).

8. Procédé selon l'une quelconque des Revendications 1 à 7, ***caractérisé en ce que*** le pH du mélange de fermentation (2) est déterminé et, lorsqu'on constate un écart avec la plage prédéterminée, le pH est ramené dans la plage définie à la Revendication 1 par ajout d'un acide ou d'une base au mélange de fermentation (2).

9. Procédé selon l'une quelconque des Revendications 1 à *8,* ***caractérisé en ce que*** la durée de la fermentation des boues primaires (1) dans l'installation de fermentation (3) est contrôlée.

10. Procédé selon la Revendication 9, ***caractérisé en ce que*** la fermentation est interrompue après un maximum de 20 jours.

11. Procédé selon l'une quelconque des Revendications 1 à 10, ***caractérisé en ce que*** la teneur en matières sèches dans l'installation de fermentation (3) est mesurée.

12. Procédé selon la Revendication 11, ***caractérisé en ce que*** la teneur en matières sèches est ajustée à au moins 0,5 % en poids et ***en ce qu***'en cas de dépassement vers le bas, du liquide est retiré de l'installation de fermentation (3).

13. Procédé selon l'une quelconque des Revendications 1 à 12, ***caractérisé en ce que*** la concentration en acides carboxyliques dans le mélange de fermentation (2) est mesurée.

14. Procédé selon la Revendication 13, ***caractérisé en ce que*** la fermentation est arrêtée quand on atteint une concentration finale prédéterminée en acides carboxyliques.

15. Procédé selon l'une quelconque des Revendications 1 à 14, ***caractérisé en ce que*** le niveau de remplissage de l'installation de fermentation (3) est contrôlé.

16. Procédé selon l'une quelconque des Revendications 1 à 15, ***caractérisé en ce que*** les grandeurs de mesure indiquées dans les Revendications précédentes sont déterminées et exploitées automatiquement à des intervalles prédéterminés, qui conviennent pour permettre un déroulement continu et entièrement automatique de l'épuration des eaux usées.

17. Procédé selon l'une quelconque des Revendications 1 à 16, ***caractérisé en ce que*** l'installation de fermentation (3) comprend deux fermenteurs (3', 3") ou plus.

18. Procédé selon la Revendication 17, ***caractérisé en ce que*** les grandeurs de mesure indiquées dans les Revendications précédentes sont déterminées et les plages de mesure et prescriptions de temps figurant dans les Revendications précédentes respectées de manière séparée pour chaque fermenteur (3', 3").

19. Procédé selon la Revendication 17 ou la Revendication 18, ***caractérisé en ce que*** l'opération de fermentation est démarrée de manière décalée dans le temps dans les fermenteurs (3', 3").

20. Procédé selon la Revendication 19, ***caractérisé en ce que*** les fermenteurs (3', 3") sont exploités de telle manière que de l'eau de lavage (6) enrichie en acides carboxyliques peut être récupérée d'au moins l'un d'eux.

21. Procédé selon la Revendication 20, ***caractérisé en ce que*** l'instant et la durée suivant lesquels des boues primaires (1) sont extraites d'un fermenteur (3', 3"), ainsi que la quantité extraite sont pilotés automatiquement en fonction du niveau de remplissage du fermenteur.

22. Dispositif (16) pour récupérer de l'eau de lavage (6) enrichie en acides carboxyliques, ***caractérisé en ce qu***'il comprend :
- une installation de fermentation (3) pour la fermentation anaérobie de boues primaires (1),
- un bassin de lavage (4) faisant suite à l'installation de fermentation (3), et
- un bassin de décantation (7) pour la séparation des boues primaires (1) fermentées et de l'eau de lavage (6) enrichie en acides carboxyliques.

23. Dispositif selon la Revendication 22, ***caractérisé en ce que*** l'installation de fermentation (3) comprend deux fermenteurs (3', 3") ou plus.

24. Dispositif selon la Revendication 22 ou 23, ***caractérisé en ce que*** l'installation de fermentation (3) et le bassin de décantation (7) sont reliés par une conduite (9) permettant de ramener des boues primaires (1) fermentées dans l'installation de fermentation (3).

25. Dispositif selon l'une quelconque des Revendications 22 à 24, ***caractérisé en ce que*** l'installation de fermentation (3) est munie d'un trop-plein (8) pour évacuer l'excédent du mélange de fermentation (2) dans le bassin de lavage (4).

26. Dispositif d'épuration d'eaux usées selon le procédé des boues activées, qui comprend un dispositif de préclarification dans lequel des boues primaires (1) sont séparées, ***caractérisé en ce que*** le dispositif de préclarification est suivi d'un dispositif (16) de récupération d'eau de lavage (6) enrichie en acides carboxyliques selon l'une quelconque des Revendications 22 à 25.
